# EUROPEAN PATENT APPLICATION

(11) **EP 4 834 800 A1**
(43) Date of publication of application: **04.11.2026**
(21) Application number: 25173708.6
(22) Date of filing: 30.04.2025
(51) Int. Cl.: B65G 1/04

(54) **A SERVICE PLATFORM FOR AN AUTOMATED STORAGE AND RETRIEVAL SYSTEM**

(71) Applicant: AutoStore Technology AS, 5578 Nedre Vats (NO)
(72) Inventor: STRØMME, Erik, 5578 Nedre Vats (NO)
(74) Representative: Kilburn & Strode LLP

(57) **Abstract**

The disclosure relates to a service platform (602) for an automated storage and retrieval system (100) and configured to be attachable to a service vehicle (502) for moving along a rail system (116) on top of a grid of the system (100), the service platform (602) comprising a base (604), a platform enclosure (606) disposed along an edge (606b) of a top surface of the base (604), and an attaching means (608) configured to attach the service platform (602) to the service vehicle (5020), wherein the service platform (602) is configured to be supported by the service vehicle (502) when the service platform (602) is attached to the service vehicle (502).

## Description

### TECHNICAL FIELD

The disclosure relates to a service platform for an automated storage and retrieval system, and a method of attaching the service platform to a service vehicle.

### BACKGROUND

An automated storage and retrieval system is a storage solution in which robots retrieve items from their logged location within the warehouse and deliver the items to a packing station or port. The system comprises a grid formed by vertical storage columns that are arranged to accommodate stacks of storage containers. Service vehicles move along a rail system on top of the grid.

### SUMMARY

Aspect(s) of the present disclosure are set out in the independent claim(s). Other aspects and features of the present disclosure are set out in the dependent claims and in the description below.

### BRIEF DESCRIPTION OF THE DRAWINGS

Implementations of the present disclosure are described below, by way of example, with reference to the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C shows a perspective side view of the robot of Fig. 3B;
Fig. 4 shows a computing device for implementing the operations described herein;
Fig. 5A shows a back left perspective view of a service vehicle for use in the system of Fig. 1;
Fig. 5B shows a top view of the service vehicle of Fig. 5A;
Fig. 5C shows a side view of the service vehicle of Fig. 5A;
Fig. 6A shows a back left perspective view of a service platform for use in the system of Fig. 1;
Fig. 6B shows a bottom right perspective view of the service platform of Fig. 6A;
Fig. 6C shows a top view of the service platform of Fig. 6A;
Fig. 6D shows a front view of the service platform of Fig. 6A;
Fig. 7A shows a back right perspective view of a first example service platform for use with the service vehicle of Fig. 5A;
Fig. 7B shows a back left perspective view of the first example service platform of Fig. 7A in the system of Fig. 1;
Fig. 7C shows a top view of the first example service platform of Fig. 7A in the system of Fig. 1;
Fig. 8A shows a back right perspective view of a second example service platform for use with the service vehicle of Fig. 5A;
Fig. 8B shows a back left perspective view of the second example service platform of Fig. 8A in the system of Fig. 1;
Fig. 8C shows a top view of the second example service platform of Fig. 78 in the system of Fig. 1; and
Fig. 9 shows a flowchart illustrating a method of the present disclosure for use in the system of Fig. 1.

Like reference numerals are used for like components throughout the detailed description.

### DETAILED DESCRIPTION

In overview, the present disclosure relates to a service platform for an automated storage and retrieval system. The service platform is configured to be attachable to a service vehicle. The service vehicle is configured to move along a rail system on top of a grid of the system. The service platform comprises a base, a platform enclosure disposed along an edge of a top surface of the base, and an attaching means configured to attach the service platform to the service vehicle. The service platform is configured to be supported by the service vehicle when the service platform is attached to the service vehicle.

Traditional storage solutions usually involve the arrangement of goods on rows of shelves within a warehouse. The shelf location for each item is recorded in an inventory, and goods are retrieved from the shelves by a stock picker. The shelves are restocked, and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

With existing automated storage and retrieval systems, on occasion, container handling vehicles may malfunction, such that they may become stranded on the grid. In such situations, an operator may need to intervene by performing a maintenance operation on the malfunctioning container handling vehicle, such as e.g. to visit and/or pick up the container handling vehicle or drag the container handling vehicle off the grid to a maintenance area for repair. In other situations, portions of the rail system may be faulty or require maintenance. For such maintenance operations, sending an operator unaided out onto the grid can be highly dangerous, and so a service vehicle is provided in which an operator can be protected as they drive out onto the grid and as they perform the maintenance operation. In addition, it is difficult to reach the rail system in a safe way from a service vehicle because of wheels and other mechanical parts of the service vehicle result in the base or floor of the service vehicle being approximately 15-20 cm above the rail system. Indeed, existing service vehicles for automated storage and retrieval systems have not proved entirely satisfactory and existing service platforms slide along the grid and so are more difficult and expensive to manufacture and disposed on top of the grid. The present disclosure seeks to provide an improved service platform for releasable attachment to a service vehicle.

The present disclosure relates to a simple service platform that is supported by the service vehicle when the service platform is attached to a service vehicle so that the service platform does not come into contact with the rail system.

The present disclosure will now be described in general terms before implementations of the disclosure are described by way of example with reference to the drawings. The word "may" is used to refer to a feature that is optional, i.e. in some implementations of the disclosure, the feature is present, and in some implementations of the disclosure, the feature is not present. This overview is provided to introduce, in simplified form, a selection of concepts that are further described herein. The presence of a feature in this overview does not imply that the feature is essential to the disclosure.

The present disclosure relates to a service platform for an automated storage and retrieval system and configured to be attachable to a service vehicle for moving along a rail system on top of a grid of the system. Therefore, the service vehicle does not need to be large and difficult to manufacture because a simple service platform can be optionally attached. In addition, the user can work closer to the rail system to work on the rail system itself or on chargers in a

The service platform comprises a base, a platform enclosure disposed along an edge of a top surface of the base, and an attaching means configured to attach the service platform to the service vehicle. The base increases a working area for a user working on top of the grid, without needing to increase a size of the service vehicle. The platform enclosure provides a safe way for a user to move directly from the service vehicle to the service platform without leaving the safety of either part.

The service platform is configured to be supported by the service vehicle when the service platform is attached to the service vehicle, meaning that the service platform does not need to rely on support from the rail system.

The service platform may be configured to be disposed above the rail system. This is advantageous because the service platform does not need to be adapted to the rail system or for moving along the rail system. In addition, the rail system will not be subject to a weight of the service platform, resulting in reduced need for maintenance on the rail system.

The service platform may be configured to be attachable to a vehicle connecting means or an edge of the service vehicle. This means that the attachment of the service platform is easy and can be provided in any position around the service vehicle. Hence, reducing adaptations and modifications to existing systems.

The attaching means may comprise a hook, a tab, a clamp, a fastener, a clip, a bracket, and/or a bolting means. Any suitable attaching means may be used, taking into account a size of the service platform and an amount of support it may need.

The service platform may comprise one first side and three remaining sides, and wherein the attaching means is configured to attach the first side of the service platform to the service vehicle. In this way, the service platform is flexible and can be used with any service vehicle.

The platform enclosure may be disposed along the edge of the top surface of the base on the three remaining sides of the service platform. The platform enclosure provides a safe way for a user to move directly from the service vehicle to the service platform without leaving the safety of either part.

The attaching means may be configured to be connected to the base. This can be done in any way depending on the required implementation, thereby increasing the flexibility of the service platform.

The platform enclosure may comprise an enclosing means and an enclosing edge. The enclosing means prevents a user falling onto the grid and the enclosing edge prevents maintenance tools falling onto the grid.

The edge of the top surface of the base may comprise at least four corners and at least four remaining portions, and wherein the enclosing means is connected to the corners of the top surface of the base, and wherein the enclosing edge is connected to at least three of the at least four remaining portions. This configuration prevents any user or tool falling into the grid and allows simple connection of the service platform to a service vehicle.

The enclosing means may comprise a railing, a fencing, a handrail, and/or a barrier, and optionally wherein the attaching means is configured to be connected to the enclosing means. This can be done in any way depending on the required implementation, thereby increasing the flexibility of the service platform.

The service platform may have a footprint extending across at least one vertical column in each of a first direction and a second direction of the top of the grid. In this way, the service platform cannot fall down into the grid, improving safety.

The base may be configured to be disposed in a horizontal plane above the rail system and adjacent to a movement means of the service vehicle to allow access to the rail system from the service vehicle. This improves the safety and flexibility of the system over using a service vehicle alone.

The service platform may not be supported by the rail system. Hence, less damage is incident on the rail system and the service platform is simplified as no further modifications for movement along the rail system are required.

The present disclosure relates to method of providing a user with access to a rail system on top of a grid of an automated storage and retrieval system. The method comprises moving a service vehicle to a position on the rail system. The method further comprises attaching an attaching means of a service platform to the service vehicle so that the service platform is supported by the service vehicle. The method further comprises opening a vehicle enclosure of the service vehicle disposed on the service vehicle upon which the service platform is connected. The service platform comprises a base, a platform enclosure disposed along an edge of a top surface of the base, and the attaching means.

The service platform may comprise the service platform of any example described herein.

Each possible combination of any of the above-described features forms part of the present disclosure. A plurality of instances of any feature may also be present. By way of example, implementations of the disclosure will now be described with reference to the drawings. Each possible combination of any features described below with any features described above also forms part of the disclosure.

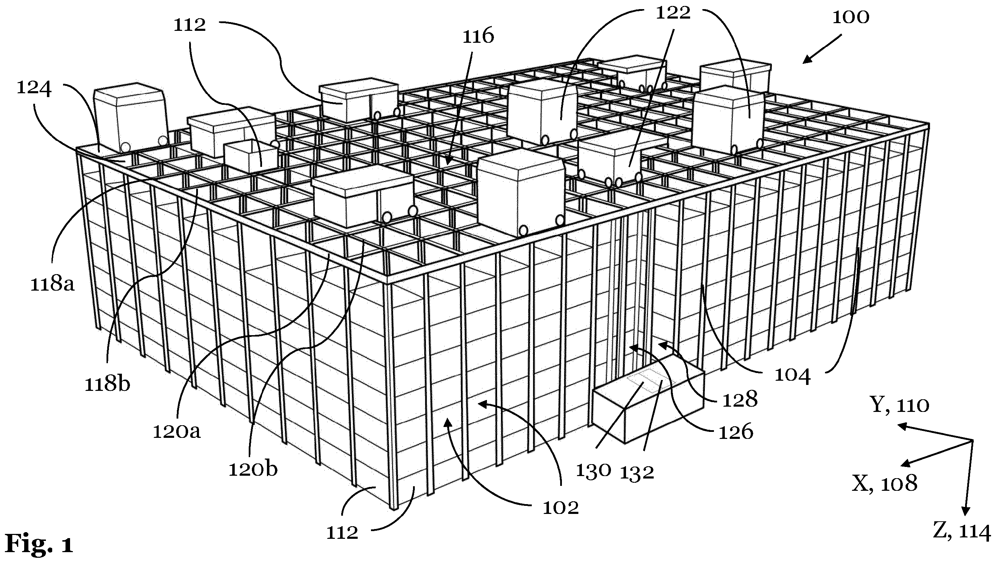

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape, and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts, or robots.

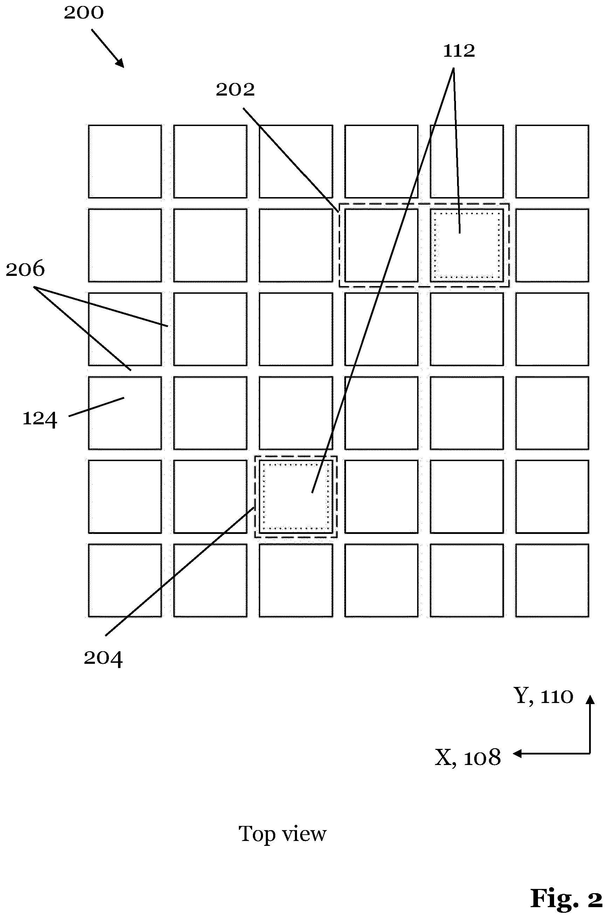

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

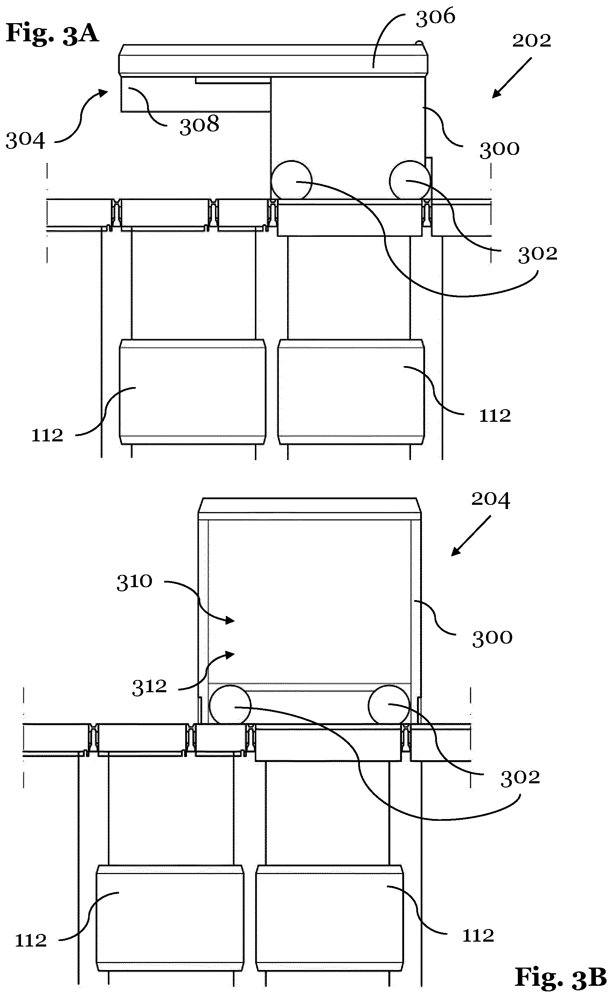

A first, 'cantilever' type of robot 202 is shown in more detail in Fig. 3A and includes a body 300, a set of wheels 302 and a lifting device 304. The body 300 contains operational equipment (not shown) for the robot 202 including drive, power, and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

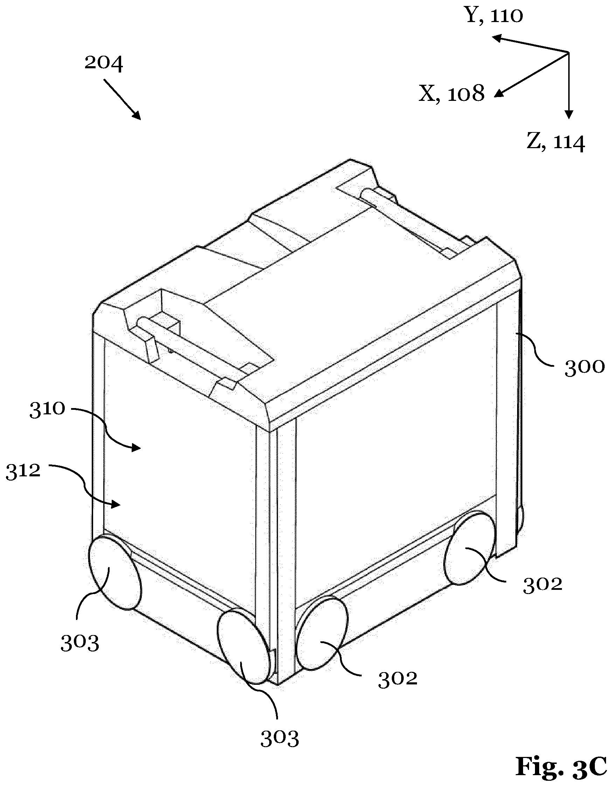

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303, respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

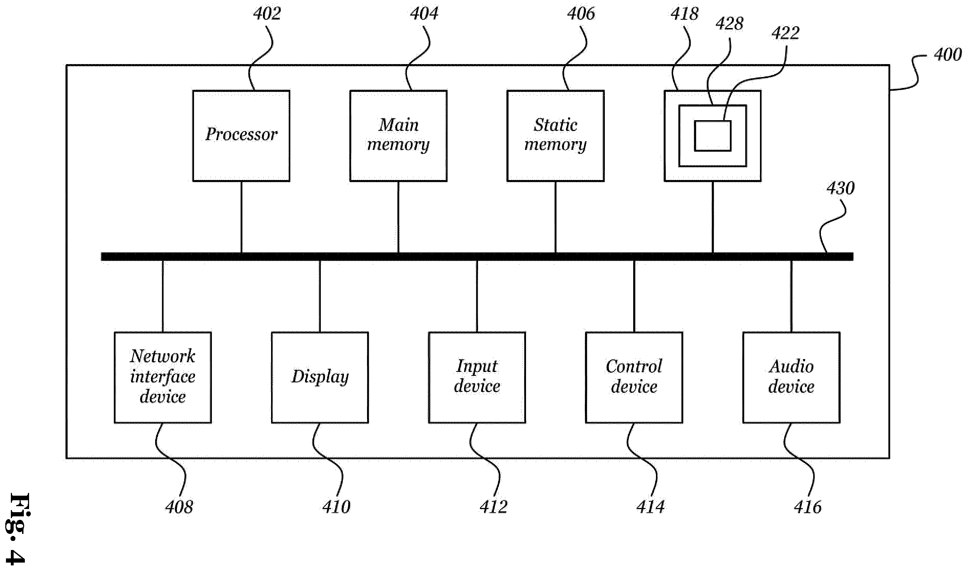

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

In operation, each bin 112 is given a unique identifier, which may be marked on the bin 112 using a computer-readable identifier (e.g., a barcode, quick-response code, or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips, and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary, as discussed above.

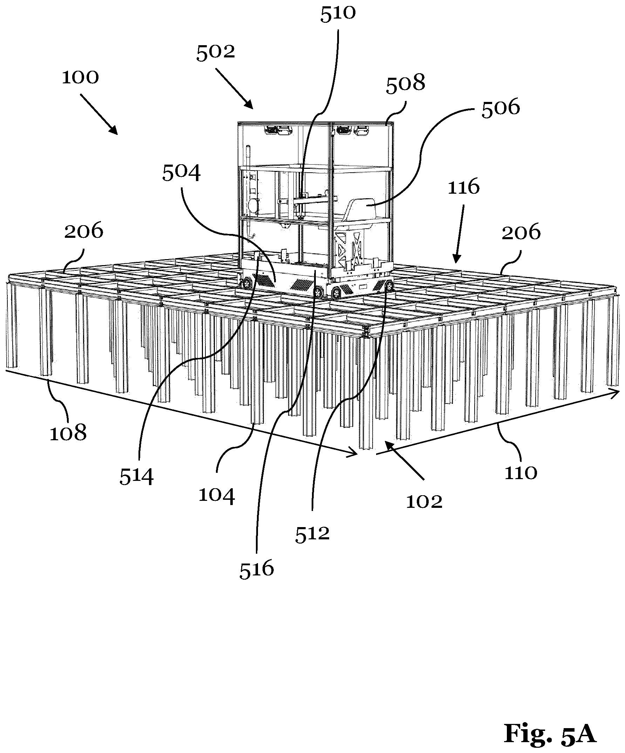

Fig. 5A shows a back left perspective view of a service vehicle 502 for use in the system of Fig. 1. The service vehicle 502 provides a space for a user or (human) operator to traverse or move over or move across the rail system 116 on top of the grid 100. As described above, the grid 100 comprises vertical columns 102 formed by vertical frame members 104 as shown. The service vehicle 502 comprises a base. The base provides space for a user to access and use the service vehicle 502. The base provides a space for a storage means. The storage means may comprise tools or other items required by the user to provide servicing or repair on a top of the grid 100 and/or on the rail system 116 and/or the rails 206 of the rail system 116.

The service vehicle 502 comprises a chassis 504, which has movement means 512 (otherwise termed "a drive system") for moving the service vehicle 502 over the grid 100 in a plurality of vehicle movement directions. The vehicle movement directions comprise one or more of a first direction, the X direction 108 and a second direction, the Y direction 110. The chassis 504 is disposed under the base of the service vehicle 502. The movement means 512 may comprise wheels that operate in the same manner as the wheels 302, 303 of robots 202, 204. The rails 206 may permit travel of the service vehicle 502 in the same way as the robots 202, 204 in the X and Y directions 108, 110.

The service vehicle 502 comprises a seat 506 for supporting a user. The seat 506 is disposed on the base of the service vehicle 502. The seat may comprise one or more of a seat frame, a seat cushion, and seat mounting means. Although a seat 506 is shown in the service vehicle 502 of Fig. 5A, the service vehicle 502 may not comprise a seat for supporting a user. In this case, the user may stand or kneel or otherwise within the service vehicle 502. This may allow the use of a service vehicle having a footprint that is smaller than the service vehicle 502 shown in Fig. 5A. The service vehicle 502 shown in Fig. 5A has a footprint extending across two vertical columns in each of the first direction, i.e., the X direction 108, and the second direction, i.e., the Y direction 110. The footprint of the service vehicle 502 may have a footprint extending across: one vertical column in each of the first direction the X direction 108 and the Y direction 110, or one vertical column in the first direction the X direction 108 and two vertical columns in the Y direction 110, or two vertical columns in the first direction the X direction 108 and one vertical column in the Y direction 110, or any other suitable configuration.

The service vehicle 502 comprises a vehicle enclosure 508 for enclosing the user. The vehicle enclosure 508 is a safety measure to protect the user from collisions with other objects that may be present on or operating on the grid 100 (such as container handling vehicles) or to prevent the user falling onto the grid 100. Although a vehicle enclosure 508 is shown in the service vehicle 502 of Fig. 5A, the service vehicle 502 may not comprise a vehicle enclosure.

The service vehicle 502 comprises a user control 510 for providing a user with the ability to control the movement means 512 to move the service vehicle 502 across the grid 100. Any means of suitable user control may be present in the service vehicle 502. The service vehicle 502 shown in Fig. 5A shows the movement means 512 as wheels of the service vehicle 502. The user control 510 is mounted to the vehicle enclosure 508 but may be mounted to any part of the service vehicle 502. The user control may be in a position that is ergonomically accessible by the user in any configuration. The user control 510 may be advantageously stowable (e.g. along an edge of the service vehicle 502 or vehicle enclosure 508) to take up less space within the vehicle enclosure 508 (e.g. by virtue of being mounted on a hinged platform). This means that the user can stow the user control 510 before/while reconfiguring the seat 506 or performing maintenance, and then can unstow/extend the user control 510 after reconfiguring the seat or performing maintenance and before operating the user control 510 to move the service vehicle 502 across the grid 100.

The service vehicle 502 may be arranged for transporting a container handling vehicle (or other vehicle that may be on the grid 100) between the grid 100 and a service area. The service area may be separate from the grid 100 or at an edge of the grid 100. In this example, the service vehicle 502 comprises vehicle connecting means 514 for attachment to/from a container handling vehicle. The connection means may comprise one or more of a robotic arm, a hook, a barb, a fastener (e.g. a threaded fastener), a magnetic attachment (e.g. electromagnet or switchable permanent magnet), and/or a suction device (e.g. a suction cup or vacuum attachment).

The service vehicle 502 comprises a vehicle edge 516. The vehicle edge 516 is a safety measure to prevent any tools or other items from the service vehicle 502 falling onto the grid 100.

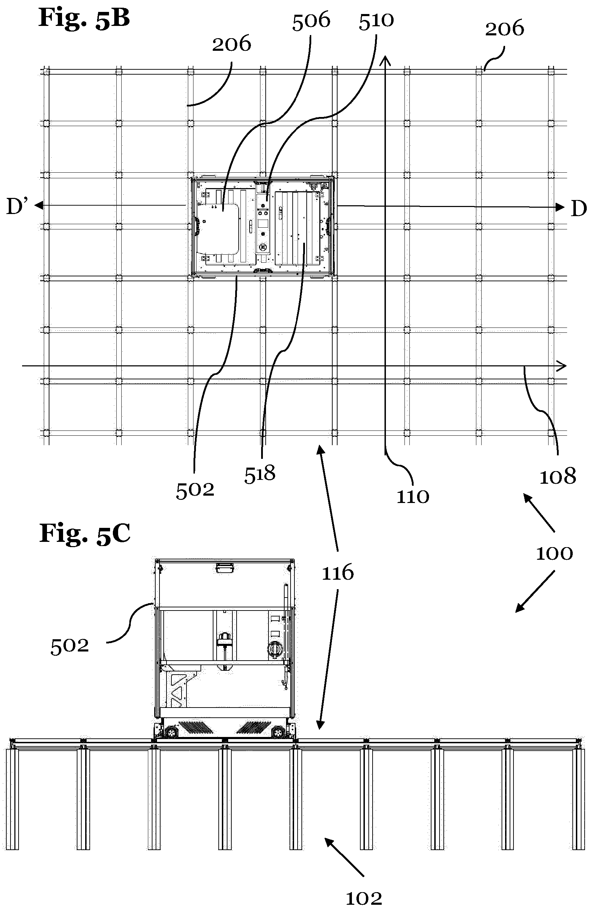

Fig. 5B shows a top view of the service vehicle 502 of Fig. 5A. In Fig. 5B, further vehicle movement directions are shown and comprise at least a first vehicle movement direction D (e.g. a forward direction) and a second vehicle movement direction D' (e.g. a backward direction) along the X direction 108. The vehicle movement directions may include a third vehicle movement direction (e.g. a left direction) and a fourth vehicle movement direction (e.g. a right direction) along the Y direction 110. The service vehicle 502 may move in any one or more of the described vehicle movement directions along the rails 206. The service vehicle 502 travels or operates on the rails 206 that the container handling vehicles use for movement.

The seat 506 is configurable in a first configuration in which the seat 506 faces a first seat direction (e.g. corresponding to the first vehicle movement direction D) relative to the chassis 504. The first seat direction may be a direction from a service area to either a container handling vehicle on the grid 100 that requires maintenance, or one or more rails 206 within the grid 100 that requires maintenance.

The user control 510 provides the user with the ability to control the movement means 512 to move the service vehicle 502 over the grid 100 in the first vehicle movement direction D. In the first configuration, the user is facing the first seat direction corresponding to the first vehicle movement direction D. Hence, the user is facilitated to control movement of the vehicle 500 in the first vehicle movement direction D. In this way, the user does not need to turn their head backwards or through an uncomfortable or impossible angle in order to see obstacles that are ahead the service vehicle 502 relative to the vehicle movement directions.

The seat 506 may be configurable in a second configuration (not shown) in which the seat 506 faces a second seat direction (e.g. corresponding to the second vehicle movement direction D') relative to the chassis 504. The second seat direction may be a direction from a container handling vehicle on the grid 100 that requires maintenance, or one or more rails 206 within the grid 100 that requires maintenance, to a service area.

The second seat direction is different from the first seat direction, for example the first seat direction is opposite the second seat direction. In other words, the first and second seat directions may differ by a rotation of approximately 180 degrees.

The user control 510 provides the user with the ability to control the movement means 512 to move the service vehicle 502 over the grid 100 in the second vehicle movement direction D'. In the second configuration, the user is facing the second seat direction corresponding to the second vehicle movement direction D'. Hence, the user is facilitated to control movement of the vehicle 500 in the second movement direction D'. In this way, the user does not need to turn their head backwards or through an uncomfortable or impossible angle in order to see obstacles that are behind the service vehicle 502 relative to the vehicle movement directions.

In Fig. 5B, the base 518 of the service vehicle 502 is shown.

Fig. 5C shows a side view of the service vehicle 502 of Fig. 5A.

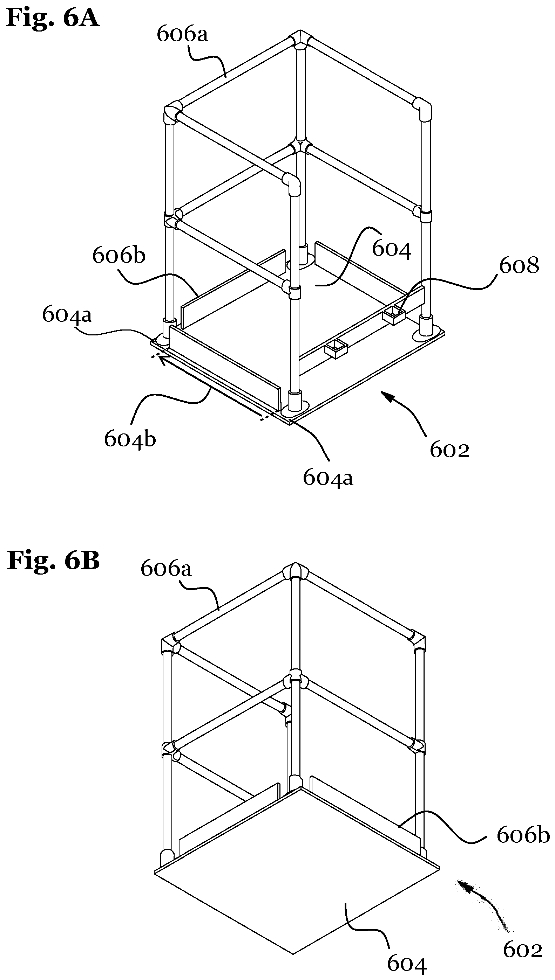

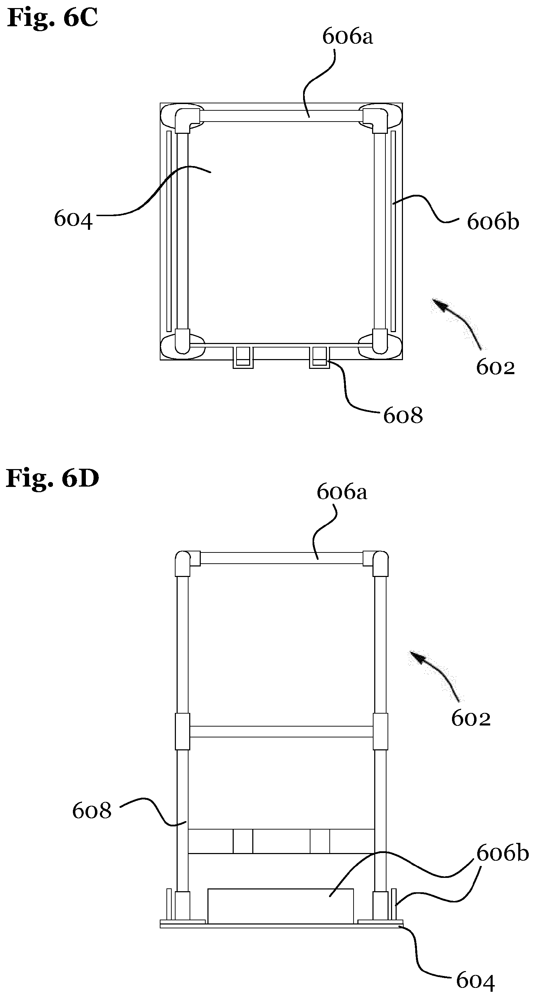

Figs. 6A-6D show a service platform 602 for an automated storage and retrieval system. The service platform 602 is configured for use with a service vehicle, such as the service vehicle 502 of Figs. 5A-5C, wherein the service vehicle 502 moves along the rail system 116 on top of the grid 100 of the system. Fig. 6A shows a back left perspective view of a service platform 602 for use with a service vehicle, such as the service vehicle 502 of Figs. 5A-5C. Fig. 6B shows a bottom right perspective view of the service platform 602 of Fig. 6A. Fig. 6C shows a top view of the service platform 602 of Fig. 6A. Fig. 6D shows a front view of the service platform 602 of Fig. 6A.

The service platform 602 provides a working space for a user on (top of) the rail system 116. The service platform 602 is configured to be (releasably) attachable (or connectable, or fixable) to a service vehicle 502. More specifically, the service platform 602 is configured to be attachable to an edge of the service vehicle 502. The service platform 602 may be configured to be attachable to the vehicle connecting means 514 or the vehicle edge 516 or the vehicle enclosure 508 at the edge of the service vehicle 502. In some examples, the service platform 602 may be attached to the service vehicle 502 at another position.

The service platform 602 is configured to be supported by the service vehicle 502 when the service platform 602 is attached to the service vehicle 502. The service platform 602 is configured to be disposed above the rail system 116. The service platform 602 is configured to be close to or parallel to or next to the rail system 116. The service platform 602 is configured to be closer to the rail system 116 than the base of the service vehicle 502. This is advantageous because it means a user is closer to the rail system, possibly does not need to bend down, and can conduct maintenance in a safe way on the rail system.

The service platform 602 comprises four sides. The four sides comprise one first side and at least three remaining sides. The first side is configured to be attachable to the service vehicle 502.

In other examples, the service platform 602 may comprise eight sides. In this example, the eight sides comprise three first sides and five remaining sides. The first sides are configured to be attachable to the service vehicle 502. In this example, the service platform 602 extends around a front of the service vehicle 502, e.g., in a C shape. The first sides are in contact with the service vehicle 502 around the front and sides of the service vehicle 502. The remaining sides are not in contact with the service vehicle 502.

The service platform 602 comprises a base 604 (or a floor, or a floorplate). The base 604 comprises four sides. The base 604 comprises top surface having an edge. The edge of the top surface of the base 604 comprises corners 604a and remaining portions 604b. The edge of the top surface of the base 604 of Figs. 6A-6D comprises four corners 604a and four remaining portions 604b. As shown in Fig. 6A, the remaining portions 604b are portions of the top surface of the base 604 in between, or connecting, the corners 604b of the base 604. The remaining portion 604b may be described as lengths of the base 604 or side portions of the base 604.

In the example of the service platform 602 comprising eight sides (for example in a C shape), the edge of the top surface of the base 604 comprises eight corners (i.e., six internal corners and two external corners) and eight remaining portions.

The base 604 is configured to be disposed in a horizontal plane above the rail system 116. The base 604 is configured to be close to the rail system 116. The base 604 is configured to be closer to the rail system 116 than the base of the service vehicle 502. The base 604 is configured to be disposed adjacent to the movement means 512 of the service vehicle 502. This allows (user) access to the rail system 116 from the service vehicle 502 via the service platform 602.

The base 604 may comprise connecting portions configured to be engaged with the lifting device of the container-handling vehicle described in relation to any example. In this example, the service platform 604 may be configured to be lifted, transported to a position on the rail system where maintenance is required, and lowered in this position by the container-handling vehicle.

The service platform 602 comprises a platform enclosure 606. The platform enclosure 606 is disposed on the base 604. More specifically, the platform enclosure 606 is disposed along the edge of the top surface of the base 604. In any example, the platform enclosure 606 is connected to the base 604 by any suitable connection means. As shown in Figs. 6A-6D, the platform enclosure 606 may be disposed along the edge of the top surface of the base 604 on the three remaining sides of the service platform 602.

In the example of the service platform 602 comprising eight sides, the platform enclosure 606 may be disposed along the edge of the top surface of the base 604 on the five remaining sides of the service platform 602. In this example, two service platforms 602 may be configured to be attached to the service vehicle 502 so that the service vehicle 502 is surrounded by the service platforms 602. In other words, the two service platforms (e.g., each in a C shape) may be fixed to one another and may surround the service vehicle upon which the service platforms 602 are attached.

The platform enclosure 606 comprises an enclosing means 606a and an enclosing edge 606b.

The enclosing means 606a is connected to the base 604. More specifically, the enclosing means 606a is connected to the corners 604a of the top surface of the base 604. The enclosing means 606a shown in Figs. 6A-6D comprises a railing. In any example, the enclosing means 606a may comprise one or more of a railing, a fencing, a handrail, a barrier, a vertical barrier, and any further suitable enclosing means. The enclosing means 606a is a safety measure to protect the user from collisions with other objects that may be present on or operating on the grid 100 (such as container handling vehicles) or to prevent the user falling onto the grid 100.

When the service vehicle 502 is attached to the service platform 602, the service vehicle 502 and the enclosing means 606a form a barrier extending around the periphery of a combined footprint of the service vehicle 502 and the service platform 602.

The enclosing edge 606b is connected to the base 604. More specifically, the enclosing edge 606b is connected to at least three of the four remaining portions 604b. The enclosing edge 606b shown in Figs. 6A-6D comprises a lip, or a tab. In any example, the enclosing edge 606b may comprise one or more of a lip, a tab, a barrier, a border, a raised edge, a rim, and any other suitable edge. The enclosing means 606a may be connected to the enclosing edges 606b. The enclosing edge 606b is a safety measure to prevent any tools or other items from the service platform 602 falling onto the grid 100. The enclosing edge 606b may be configured to be retractable.

The service platform 602 comprises an attaching means 608. The attaching means 608 is configured to attach the service platform 602 to the service vehicle 502. More specifically, the attaching means 608 is configured to attach the service platform 602 (e.g., the first side of service platform 602) to the edge of the service vehicle 502. The attaching means 608 comprises any suitable means of attaching the service platform 602 to the service vehicle 502. The attaching means 608 may comprise one or more of a hook, a tab, a clamp, a fastener, a clip, a bracket, and a bolting means. The attaching means 608 shown in Figs. 6A-6D is suitable for attaching to the vehicle connecting means 514 of the service vehicle 502. Any suitable attaching means 608 may be used for attachment of the service platform 602 to the vehicle edge 516 of the service vehicle 502, as described.

The attaching means 608 shown in Figs. 6A-6D is connected to the enclosing means 606a. The attaching means 608 of this example comprises a bar and two hooks and is fixed onto the enclosing means 606a between two railings via the bar. In any example, the attaching means 608 may be connected to either of the base 604 or the platform enclosure 606, including the enclosing means 606a and the enclosing edge 606b. When the attaching means 608 is connected to the base 604, the attaching means may comprise two hooks, for example.

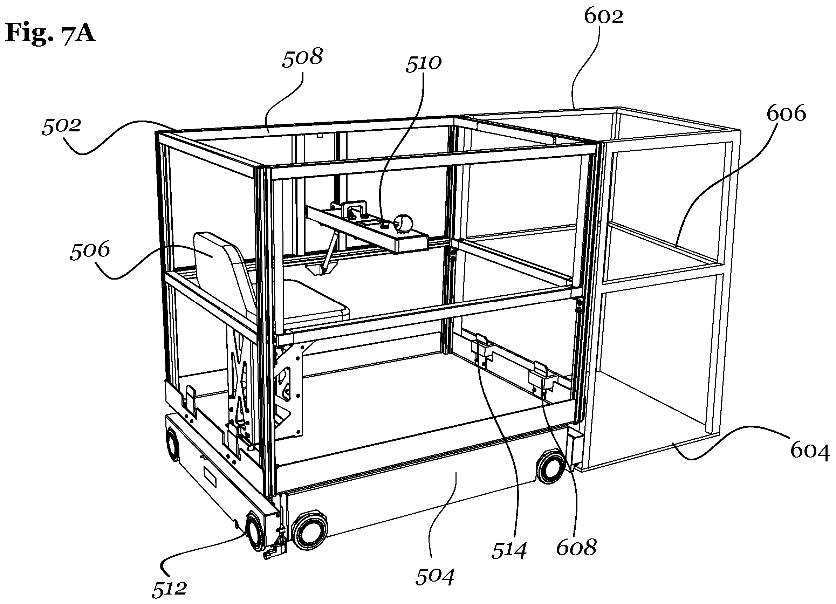

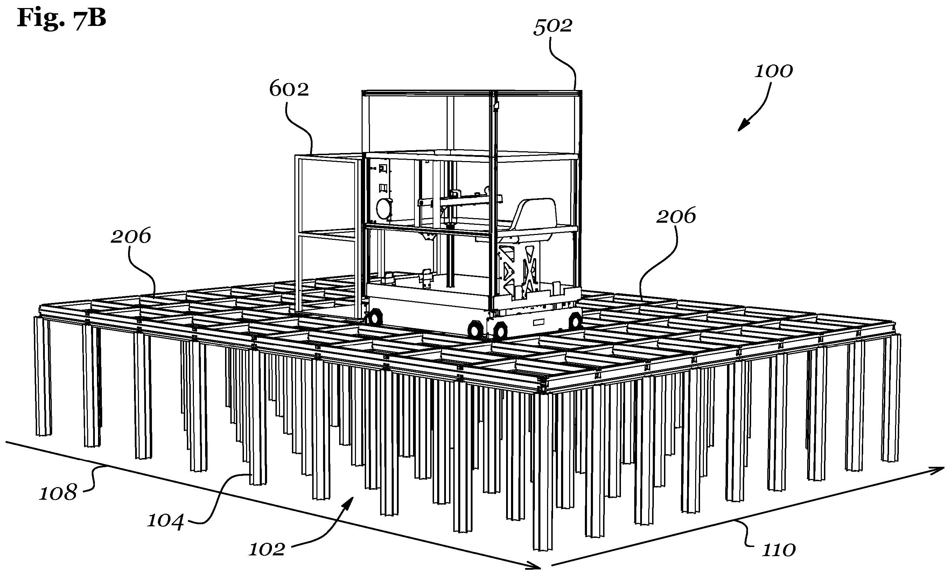

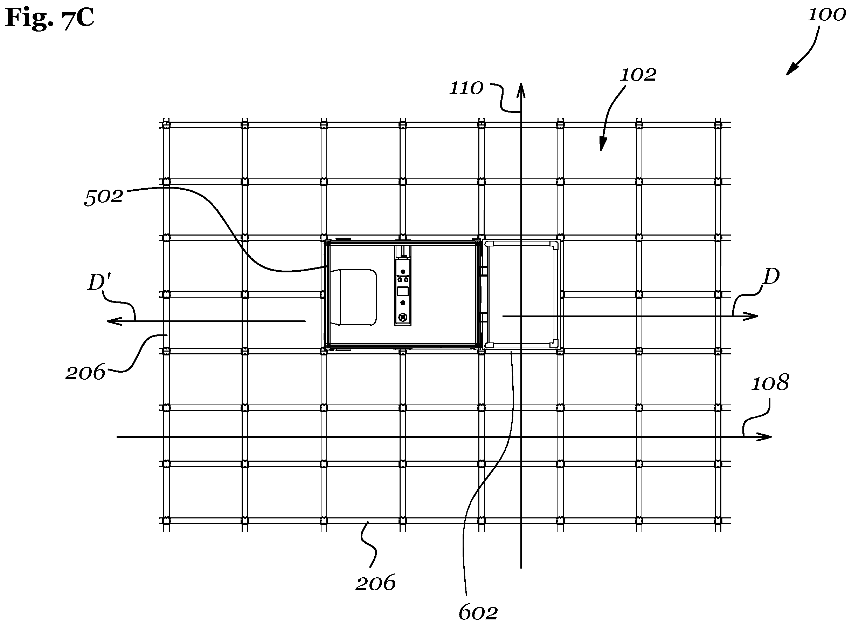

Figs. 7A-7C show a first example service platform 602 attached to a service vehicle for an automated storage and retrieval system. The service vehicle 502 moves along the rail system 116 on top of the grid 100 of the system. Fig. 7A shows a back right perspective view of a service platform 602 attached to a service vehicle, such as the service vehicle 502 of Figs. 5A-5C. Fig. 7B shows a back left perspective view of the service platform 602 of Fig. 7A on the grid 100 of Fig. 1. Fig. 7C shows a top view of the service platform 602 of Fig. 7A on the grid 100 of Fig. 1.

The service platform 602 of Figs. 7A-7C may comprise any of the features of the service platform 602 described in relation to Figs. 6A-6D.

The service platform 602 of Figs. 7A-7C is configured to be releasably attachable to the service vehicle 502. More specifically, the service platform 602 is configured to be attachable to the vehicle connecting means 514 at the edge of the service vehicle 502. The edge of the service vehicle 502 is at a front of the service vehicle 502. As shown, the service platform 602 is attached to the service vehicle 502.

The service platform 602 comprises four sides. The four sides comprise one first side and three remaining sides. The first side is configured to be attachable to the service vehicle 502.

The service platform 602 comprises a base 604 as described in relation to Figs. 6A-6D.

The service platform 602 comprises a platform enclosure 606 disposed along or connected to the edge of the top surface of the base 604. The platform enclosure 606 comprises an enclosing means 606a connected to the corners 604a of the top surface of the base 604. The enclosing means 606a comprises a vertical barrier or a fencing. The service vehicle 502 and the enclosing means 606a form a barrier extending around the periphery of a combined footprint of the service vehicle 502 and the service platform 602.

The service platform 602 comprises an attaching means 608 attaching the service platform 602 to the service vehicle 502. The attaching means 608 is disposed on the first side of the service platform 602 and is attached to a front edge of the service vehicle 502. The attaching means 602 comprises a bar and two hooks and is fixed onto the enclosing means 606a between two railings via the bar. In any example, the attaching means 608 may be connected to either of the base 604 or the platform enclosure 606, including the enclosing means 606a and the enclosing edge 606b. When the attaching means 608 is connected to the base 604, the attaching means may comprise two hooks, for example.

In Figs. 7B-7C, the service platform 602 is disposed above the rail system 116. The service platform 602 is close to or parallel to or next to or on top of the rail system 116. The service platform 602 is closer to the rail system 116 than the base of the service vehicle 502. The service platform 602 is configured to be supported by the service vehicle 502 only. No support is provided from the rail system 116 or the grid 100 to the service platform 602, i.e. the service platform 602 is not supported by the rail system 116.

As seen in Fig. 7C, the service platform 602 or base 604 shown has a footprint extending over or across one vertical column in the first direction 108 and two vertical columns in the second direction 110. The footprint of the service platform 602 or base 604 may extend across: one vertical column in each of the first and second directions 108, 110; one vertical column in the first direction 108 and two vertical columns in the second direction 110; two vertical columns in the first direction 108 and one vertical column in the second direction 110; or two vertical columns in each of the first and second directions 108, 110. In general, the service platform 602 or base 604 has a footprint extending over or across at least one vertical column in each of a first direction and a second direction of the top of the grid. In other examples, a size or footprint of the base 604 of the service platform 602 may vary provided it covers at least one vertical column (or grid cell) such that the service platform 602 cannot fall down into the grid 100. The service platform 602 preferably has a footprint that is less than two vertical columns in each direction because support is only provided from the service vehicle 502 so the service platform 602 must be light enough to be supported in this way.

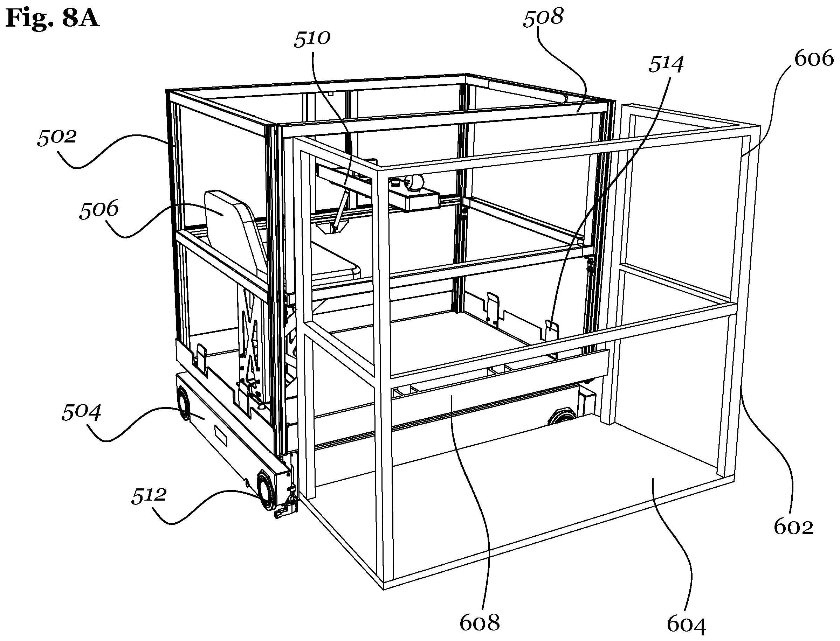

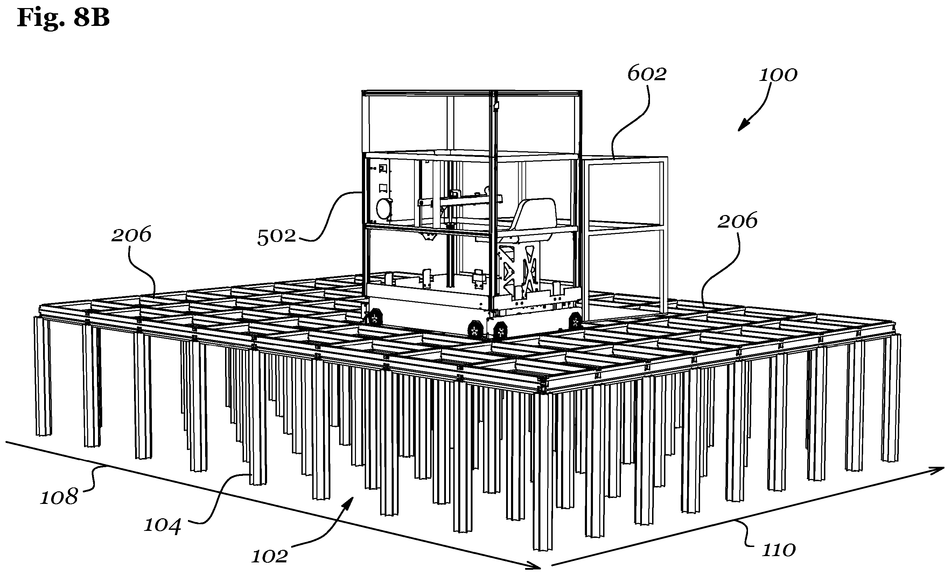

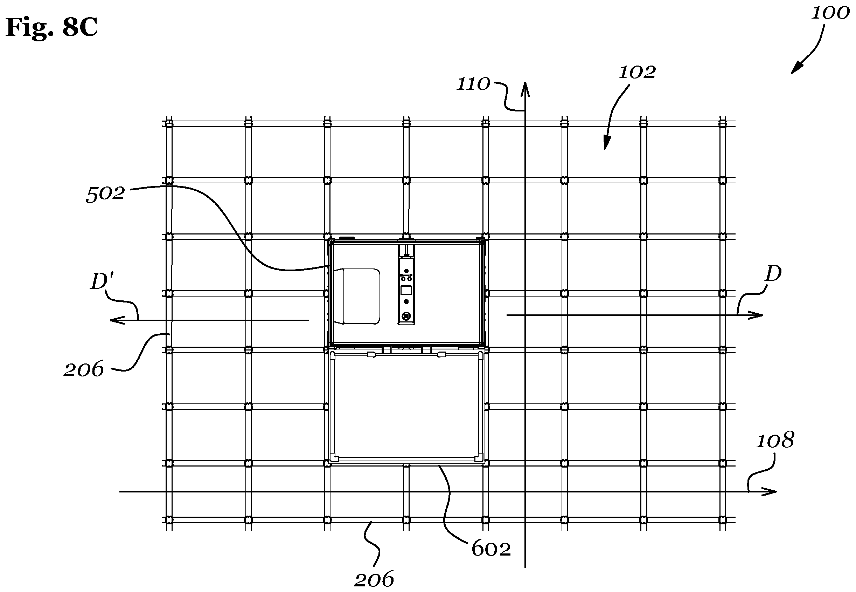

Figs. 8A-8C show a second example service platform 602 attached to a service vehicle for an automated storage and retrieval system. The service vehicle 502 moves along the rail system 116 on top of the grid 100 of the system. Fig. 8A shows a back right perspective view of a service platform 602 attached to a service vehicle, such as the service vehicle 502 of Figs. 5A-5C. Fig. 8B shows a back left perspective view of the service platform 602 of Fig. 8A on the grid 100 of Fig. 1. Fig. 8C shows a top view of the service platform 602 of Fig. 8A on the grid 100 of Fig. 1.

The service platform 602 of Figs. 8A-8C may comprise any of the features of the service platform 602 described in relation to Figs. 6A-7C.

The service platform 602 of Figs. 8A-8C is configured to be releasably attachable to the service vehicle 502. More specifically, the service platform 602 is configured to be attachable to the vehicle edge 516 at the edge of the service vehicle 502. The edge of the service vehicle 502 is at a right side of the service vehicle 502. As shown, the service platform 602 is attached to the service vehicle 502.

The service platform 602 comprises four sides. The four sides comprise one first side and three remaining sides. The first side is configured to be attachable to the service vehicle 502.

The service platform 602 comprises a base 604 as described in relation to Figs. 6A-6D.

The service platform 602 comprises a platform enclosure 606 disposed along or connected to the edge of the top surface of the base 604. The platform enclosure 606 comprises an enclosing means 606a connected to the corners 604a of the top surface of the base 604. The enclosing means 606a comprises a vertical barrier or a fencing. The service vehicle 502 and the enclosing means 606a form a barrier extending around the periphery of a combined footprint of the service vehicle 502 and the service platform 602.

The service platform 602 comprises an attaching means 608 attaching the service platform 602 to the service vehicle 502. The attaching means 608 is disposed on the first side of the service platform 602 and is attached to a front edge of the service vehicle 502. The attaching means 602 in the example of Fig. 8C comprises a bar and two hooks and is fixed onto the enclosing means 606a between two railings via the bar. The hooks shown in Figs. 8A-8C differ from the hooks shown in Figs. 7A-7C because they are attached to the vehicle edge 516 at the edge of the service vehicle 502 instead of the vehicle connecting means 514 at the edge of the service vehicle 502 as in Figs. 7A-7C. The hooks may comprise further fastening means to ensure a reliable attachment of the service platform 602 to the service vehicle 502. The side edge of the service vehicle may comprise a modification for attaching a service platform 602, such as including a further vehicle connecting means at the side edge of the service vehicle 502.

In any example, the attaching means 608 may be connected to either of the base 604 or the platform enclosure 606, including the enclosing means 606a and the enclosing edge 606b. When the attaching means 608 is connected to the base 604, the attaching means may comprise two hooks, for example.

In Figs. 8B-8C, the service platform 602 is disposed above the rail system 116. The service platform 602 is close to or parallel to or next to or on top of the rail system 116. The service platform 602 is closer to the rail system 116 than the base of the service vehicle 502. The service platform 602 is configured to be supported by the service vehicle 502 only. No support provided is provided from the rail system 116 or the grid 100 to the service platform 602.

As seen in Fig. 8C, the service platform 602 or base 604 shown has a footprint extending over or across two vertical columns in each of the first and second direction 108, 110. As described, a size or footprint of the base 604 of the service platform 602 may vary.

Any combination of any of the features of any service platform 602 described herein is possible. Indeed, the service platform 602 may comprise a service platform system having more than one service platform that may be configured to be arranged adjacent to each other to provide a larger workspace. For example, there may be two service platforms 602. A first service platform may be configured to be attached to the front of the service vehicle, and a second service platform may be configured to be attached to the side of the service vehicle, as described above. The platform enclosure 606 on the adjacent sides of the first and second service platform may be openable or removeable to provide a larger workspace.

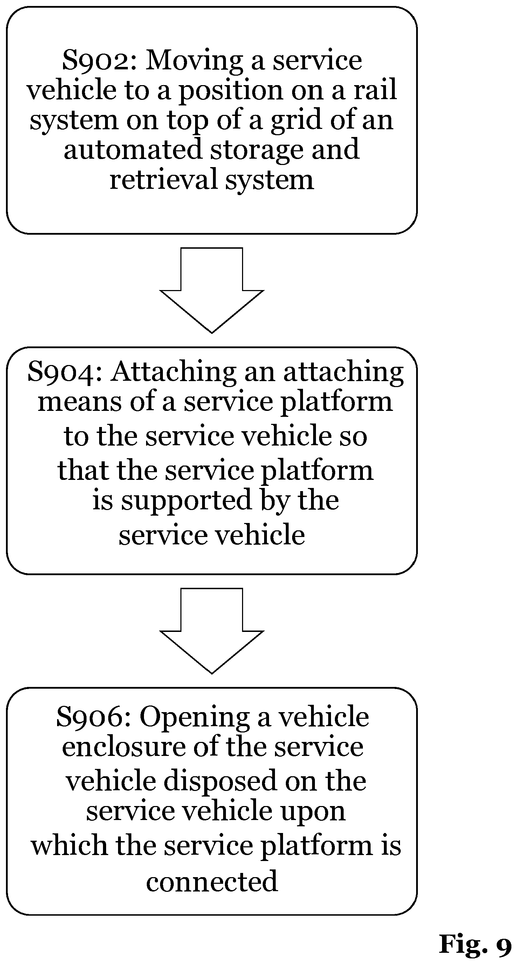

Fig. 9 shows a flowchart illustrating a method of the present disclosure for use in the system of Fig. 1. The method relates to providing a user with access to a rail system on top of a grid of an automated storage and retrieval system, such as the rail system 116 on top of the grid 100 of the system of Fig. 1.

At a first step S902, the method comprises moving a service vehicle to a position on the rail system. After the first step S902 and before a second step S904, the method may comprise lowering a service platform down to or towards the rail system at a position adjacent to the position of the service vehicle. The service platform may comprise a base, a platform enclosure disposed along an edge of a top surface of the base, and an attaching means. At the second step S904, the method comprises attaching a or the attaching means of a or the service platform to the service vehicle. During this step, the service platform is thereby supported by the service vehicle. At a third step S906, the method comprises opening a vehicle enclosure of the service vehicle disposed on the service vehicle upon which the service platform is connected. After the third step S906, the method may comprise moving the user to the service platform from the service vehicle, thereby providing the user with access to the rail system. This is possible because the base of the service platform is closer to the rail system than the base of the service vehicle. The service platform may comprise any of the features of the service platform 602 described herein.

In some examples, before the first step S902, the method may comprise positioning a service platform in front of a service vehicle, and during the first step S902, the method may comprise pushing or sliding the service platform, by the service vehicle, to the position on the rail system.

Aspects of the present disclosure are set out below. Each item below corresponds to an aspect of the disclosure, and each possible combination of any of the items corresponds to an aspect of the disclosure. When items are combined, two or more instances of an element with the same name are to be understood as referring to the same element, even if the element is introduced by the word "a" more than once. Each possible combination of any features from the items below with any features described above also forms part of the disclosure.
Aspect 1a. A service platform for an automated storage and retrieval system, the service platform comprising an attaching means configured to attach the service platform to a service vehicle for moving along a rail system on top of a grid of the system,
   wherein the service platform is configured to be supported by the service vehicle when the service platform is attached to the service vehicle.
Aspect 1b. The service platform of aspect 1a, wherein the service platform is configured to be attachable to the service vehicle.
Aspect 1c. The service platform of aspect 1a or aspect 1b, further comprising a base and platform enclosure disposed along an edge of a top surface of the base.
Aspect 1d. A service platform for an automated storage and retrieval system and configured to be attachable to an edge of a service vehicle for moving along a rail system on top of a grid of the system, the service platform comprising:
   a base;
   a platform enclosure disposed along an edge of a top surface of the base; and
   an attaching means configured to attach the service platform to the service vehicle,
   wherein the service platform is configured to be supported by the service vehicle when the service platform is attached to the service vehicle.
Aspect 2. The service platform of any one of the preceding aspects, wherein the service platform is configured to be disposed above the rail system.
Aspect 3. The service platform of any one of the preceding aspects, wherein the service platform is configured to be attachable to a vehicle connecting means or an edge of the service vehicle or at an edge of the service vehicle.
Aspect 4. The service platform of any one of the preceding aspects, wherein the attaching means comprises a hook, a tab, a clamp, a fastener, a clip, a bracket, and/or a bolting means.
Aspect 5a. The service platform of any one of the preceding aspects, wherein the service platform comprises one first side and three remaining sides.
Aspect 5b. The service platform of any one of the preceding aspects, wherein the attaching means is configured to attach a or the first side of the service platform to a or the service vehicle.
Aspect 6. The service platform of any one of aspects 1c to 5b, wherein the platform enclosure is disposed along the edge of the top surface of the base on a or the three remaining sides of the service platform.
Aspect 7. The service platform of any one of the preceding aspects, wherein the attaching means is configured to be connected to a or the base.
Aspect 8. The service platform of any one of the preceding aspects, wherein a or the platform enclosure comprises an enclosing means and an enclosing edge.
Aspect 9a. The service platform of any one of aspects 1c to 8, wherein the edge of the top surface of the base comprises at least four corners and at least four remaining portions.
Aspect 9b. The service platform of any one of aspects 1c to 9a, wherein an or the enclosing means is connected to corners (or the corners) of the top surface of the base.
Aspect 9c. The service platform of any one of aspects 1c to 9b, wherein an or the enclosing edge is connected to at least three of an or the at least four remaining portions of the edge of the top surface of the base.
Aspect 10a. The service platform of any one of the preceding aspects, wherein an or the enclosing means comprises a railing, a fencing, a handrail, and/or a barrier.
Aspect 10a. The service platform of any one of the preceding aspects, wherein the attaching means is configured to be connected to an or the enclosing means.
Aspect 11. The service platform of any one of the preceding aspects, wherein the service platform has a footprint extending across at least one vertical column in each of a first direction and a second direction of the top of the grid.
Aspect 12. The service platform of any one of the preceding aspects, wherein a or the base is configured to be disposed in a horizontal plane above the rail system and adjacent to a movement means of the service vehicle to allow access to the rail system from the service vehicle.
Aspect 13. The service platform of any preceding aspect, wherein the service platform is not supported by the rail system.
Aspect 14a. A service platform for an automated storage and retrieval system, the service platform attached to an edge of a service vehicle for moving along a rail system on top of a grid of the system, the service platform comprising:
   a base;
   a platform enclosure disposed along an edge of a top surface of the base; and
   an attaching means attached to the service vehicle,
   wherein the service platform is configured to be supported by the service vehicle.
Aspect 14b. The service platform of aspect 14a, comprising the service platform of any one of aspects 2 to 13.
Aspect 14c. A service vehicle for an automated storage and retrieval system, comprising the service platform of any one of aspects 1a to 13.
Aspect 14d. A service vehicle for an automated storage and retrieval system, the service vehicle releasably attached to the service platform of any one of aspects 1a to 13.
Aspect 15. A method of providing a user with access to a rail system on top of a grid of an automated storage and retrieval system, the method comprising:
   moving a service vehicle to a position on the rail system;
   attaching an attaching means of a service platform to the service vehicle so that the service platform is supported by the service vehicle; and
   opening a vehicle enclosure of the service vehicle disposed on the service vehicle upon which the service platform is connected,
   wherein the service platform comprises a base, a platform enclosure disposed along an edge of a top surface of the base, and the attaching means.
Aspect 16. The method of aspect 15, wherein the service platform comprises the service platform of any one of aspects 2 to 14b and/or the service vehicle comprise the service vehicle of aspect 14c or aspect 14d.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A service platform for an automated storage and retrieval system and configured to be attachable to a service vehicle for moving along a rail system on top of a grid of the system, the service platform comprising:
a base;
a platform enclosure disposed along an edge of a top surface of the base; and
an attaching means configured to attach the service platform to the service vehicle,
wherein the service platform is configured to be supported by the service vehicle when the service platform is attached to the service vehicle.

2. The service platform of claim 1, wherein the service platform is configured to be disposed above the rail system.

3. The service platform of claim 1 or claim 2, wherein the service platform is configured to be attachable to a vehicle connecting means or an edge of the service vehicle.

4. The service platform of any one of the preceding claims, wherein the attaching means comprises a hook, a tab, a clamp, a fastener, a clip, a bracket, and/or a bolting means.

5. The service platform of any one of the preceding claims, wherein the service platform comprises one first side and three remaining sides, and
wherein the attaching means is configured to attach the first side of the service platform to the service vehicle.

6. The service platform of claim 5, wherein the platform enclosure is disposed along the edge of the top surface of the base on the three remaining sides of the service platform.

7. The service platform of any one of the preceding claims, wherein the attaching means is configured to be connected to the base.

8. The service platform of any one of the preceding claims, wherein the platform enclosure comprises an enclosing means and an enclosing edge.

9. The service platform of claim 8, wherein the edge of the top surface of the base comprises at least four corners and at least four remaining portions, and
wherein the enclosing means is connected to the corners of the top surface of the base, and
wherein the enclosing edge is connected to at least three of the at least four remaining portions.

10. The service platform of claim 8 or claim 9, wherein the enclosing means comprises a railing, a fencing, a handrail, and/or a barrier, and optionally
wherein the attaching means is configured to be connected to the enclosing means.

11. The service platform of any one of the preceding claims, wherein the service platform has a footprint extending across at least one vertical column in each of a first direction and a second direction of the top of the grid.

12. The service platform of any one of the preceding claims, wherein the base is configured to be disposed in a horizontal plane above the rail system and adjacent to a movement means of the service vehicle to allow access to the rail system from the service vehicle.

13. The service platform of any preceding claim, wherein the service platform is not supported by the rail system.

14. A method of providing a user with access to a rail system on top of a grid of an automated storage and retrieval system, the method comprising:
moving a service vehicle to a position on the rail system;
attaching an attaching means of a service platform to the service vehicle so that the service platform is supported by the service vehicle; and
opening a vehicle enclosure of the service vehicle disposed on the service vehicle upon which the service platform is connected,
wherein the service platform comprises a base, a platform enclosure disposed along an edge of a top surface of the base, and the attaching means.

15. The method of claim 14, wherein the service platform comprises the service platform of any one of claims 2-13.
